(19) Europäisches Patentamt
European Patent Office
Office européen des brevets

(11) **EP 4 730 205 A1**

(12) **EUROPEAN PATENT APPLICATION**
published in accordance with Art. 153(4) EPC

(43) Date of publication:
**22.04.2026 Bulletin 2026/17**

(21) Application number: **24842299.0**

(22) Date of filing: **12.07.2024**

(51) International Patent Classification (IPC):
**G06N 3/082** $^{(2023.01)}$     **G06N 3/0495** $^{(2023.01)}$

(52) Cooperative Patent Classification (CPC):
**G06N 3/0495; G06N 3/082**

(86) International application number:
**PCT/CN2024/105152**

(87) International publication number:
**WO 2025/016306 (23.01.2025 Gazette 2025/04)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **14.07.2023 CN 202310871579**

(71) Applicant: **Hangzhou Hikvision Digital Technology Co., Ltd.**
**Hangzhou, Zhejiang 310051 (CN)**

(72) Inventors:
• **LIN, Chen**
  **Hangzhou, Zhejiang 310051 (CN)**
• **PENG, Bo**
  **Hangzhou, Zhejiang 310051 (CN)**
• **LI, Zheyang**
  **Hangzhou, Zhejiang 310051 (CN)**
• **TAN, Wenming**
  **Hangzhou, Zhejiang 310051 (CN)**

(74) Representative: **Murgitroyd & Company**
**165-169 Scotland Street**
**Glasgow G5 8PL (GB)**

(54) **MODEL QUANTIZATION METHOD AND APPARATUS, AND DEVICE AND STORAGE MEDIUM**

(57) A model quantization method and apparatus, and a device and a storage medium, which belong to the technical field of model quantization. The method comprises: acquiring a performance deviation corresponding to each model layer in a model to be quantized; constructing a hierarchical quantization sequence according to the performance deviations corresponding to the respective model layers; and performing hierarchical quantization processing on the model layers in said model on the basis of the hierarchical quantization sequence. A hierarchical quantization sequence is constructed according to performance deviations corresponding to respective model layers in a model to be quantized, hierarchical quantization processing is respectively performed on the model layers in said model according to the sequence order of the hierarchical quantization sequence, and after quantization during the processing parameter adjustment and correction are used to reduce a performance loss of the model to the greatest possible extent, which performance loss is generated by low-bit quantization.

Obtain performance deviations corresponding to each model layer in the decoding model to be quantized — S10

↓

Construct a hierarchical quantization sequence according to the performance deviations corresponding to each model layer — S20

↓

Perform hierarchical quantization processing on model layers in the decoding model to be quantized based on the hierarchical quantization sequence — S30

**FIG. 2**

**Description**

**TECHNICAL FIELD**

The present disclosure relates to the field of model quantization, and particular, to a model quantization method, apparatus, device and storage medium.

**BACKGROUND**

In the field of image encoding and decoding, artificial intelligence-based methods can achieve higher compression rates than conventional methods, and thus become an important trend in the encoding and decoding field. This is because networks trained through deep learning can better compress and restore images. However, it also brings greater amount of computation and resource consumption compared to conventional methods, which undoubtedly imposes higher requirements on the decoding devices.

An image decoder is generally deployed on a device that decodes bitstreams, while the neural network in the decoder has a large number of parameters and a large amount of computation, which makes the forward calculation of the neural network require considerable storage and computing resources. At the same time, under the parameters in the floating-point state, due to differences in computation precision across different devices, the decoding results between devices may also exhibit inconsistencies.

The model quantization can convert the floating-point parameters in a model into fixed-point parameters, which can reduce the storage consumption of the model while also saving the bandwidth during forward computation of the model. Besides, converting the floating-point parameters in the model into fixed-point parameters can reduce the computation amount of the model, and can also avoid the impact of computation precision inconsistencies, ensuring the consistency of decoding among different devices.

However, the sensitivity to quantization varies across each layer of the neural network in the decoder. It is difficult for some layers to guarantee the quantization performance at lower bits, and because some devices do not support high-bit quantization operations, in order to adapt to this scenario, how to reduce the performance loss caused by the quantization of the model at lower bits is a difficult problem.

The above content is only used to assistant in understanding the technical solution of the present disclosure, and does not constitute an admission that the above content is prior art.

**SUMMARY**

The main purpose of the present disclosure is to provide a model quantization method, apparatus, device, and storage medium, aiming to reduce the performance loss incurred when quantizing a model using low bits.

In order to achieve the above purpose, the present disclosure provides a model quantization method, which comprises:

obtaining performance deviations corresponding to each model layer in a model to be quantized;
constructing a hierarchical quantization sequence according to the performance deviations corresponding to each model layer;
performing hierarchical quantization processing on model layers in the model to be quantized based on the hierarchical quantization sequence.

In a possible implementation of the present disclosure, constructing the hierarchical quantization sequence according to the performance deviations corresponding to each model layer includes:
sorting each model layer in the model to be quantized according to descending order of the corresponding performance deviations to obtain the hierarchical quantization sequence.

In a possible implementation of the present disclosure, sorting each model layer in the model to be quantized according to descending order of the corresponding performance deviations to obtain the hierarchical quantization sequence includes:

sorting each model layer in the model to be quantized according to descending order of the corresponding performance deviations to obtain a model layer sequence;
truncating the model layer sequence front-to-back according to a preset length, to obtain the hierarchical quantization sequence.

In a possible implementation of the present disclosure, the performance deviation corresponding to a model layer in the model to be quantized is a deviation between outputs of the model to be quantized before and after the model layer is individually quantized.

In a possible implementation of the present disclosure, performing the hierarchical quantization processing on the model layers in the model to be quantized based on the hierarchical quantization sequence includes:

traversing the hierarchical quantization sequence, and taking the model layer currently being traversed as a current model layer;
performing quantization on the current model layer;
adjusting at least one model parameter in the model to be quantized with an objective of reducing the performance deviation corresponding to the current model layer;
detecting whether an untraversed model layer exists in the hierarchical quantization sequence;
in response to determining that an untraversed model layer exists in the hierarchical quantization sequence, returning to a step of traversing the hierarchical quantization sequence and taking the model layer currently being traversed as the current model layer.

In a possible implementation of the present disclosure, adjusting at least one model parameter in the model to be quantized with the objective of reducing the performance deviation corresponding to the current model layer includes:
adjusting at least one model parameter in the model to be quantized by employing gradient derivation, with the objective of reducing the performance deviation corresponding to the current model layer.

In a possible implementation of the present disclosure, adjusting at least one model parameter in the model to be quantized comprises at least one of:

adjusting at least one model parameter of the current model layer;
adjusting at least one model parameter of the current model layer and at least one model parameter of a model layer adjacent to the current model layer;
adjusting at least one model parameter of each model layer in the model to be quantized.

In a possible implementation of the present disclosure, the method further includes:

in response to determining that no untraversed model layer exists in the hierarchical quantization sequence, detecting whether an unquantized model layer exists in the model to be quantized;
in response to determining that no unquantized model layer exists in the model to be quantized, determining that quantization of the model to be quantized is completed.

In a possible implementation of the present disclosure, the method further includes:

in response to determining that an unquantized model layer exists in the model to be quantized, performing quantization on the unquantized model layer;
in response to the quantization of the unquantized model layer being completed, determining that the quantization of the model to be quantized is completed.

In a possible implementation of the present disclosure, the model to be quantized is a decoding model or an encoding model.

In a possible implementation of the present disclosure, truncating the model layer sequence front-to-back according to the preset length includes: truncating the model layer sequence front-to-back from a first model layer comprised in the model layer sequence according to the preset length.

In addition, to achieve the above purpose, the present disclosure also proposes a model quantization apparatus, the model quantization apparatus including:

an obtaining module, configured to obtain performance deviations corresponding to each model layer in a model to be quantized;
a construction module, configured to construct a hierarchical quantization sequence according to the performance deviations corresponding to each model layer;
a quantization module, configured to perform hierarchical quantization processing on model layers in the model to be quantized based on the hierarchical quantization sequence.

In addition, to achieve the above purpose, the present disclosure also proposes a model quantization device, which includes a processor, a memory, and a model quantization program stored on the memory and executable by the processor, wherein the model quantization program is executed by the processor to perform any of the above model quantization methods.

In addition, to achieve the above purpose, the present disclosure also provides an encoding device, which comprises a processor, a memory, and an encoding program stored on the memory and executable by the processor, wherein the encoding program is executed by the processor to perform any of the above model quantization methods.

In addition, to achieve the above purpose, the present disclosure also provides a decoding device, which comprises a processor, a memory, and a decoding program stored on the memory and executable by the processor, wherein the decoding program is executed by the processor to perform any of the above model quantization methods.

In addition, to achieve the above purpose, the present disclosure also proposes a storage medium, on which a model quantization program is stored, and the model quantization program is configured to execute any of the above model quantization methods.

The present disclosure obtains performance deviations corresponding to each model layer in a model to be quantized, constructs a hierarchical quantization sequence according to the performance deviations corresponding to each model layer, and performs hierarchical quantization processing on model layers in the model to be quantized based on the hierarchical quantization sequence. Since the hierarchical quantization sequence is constructed according to the performance deviations corresponding to each model layer in the model to be quantized, and hierarchical quantization processing is performed on each model layer in the model to be quantized respectively, according to the order of the hierarchical quantization sequence, and parameter adjustment is utilized after quantization during processing, so as to reduce the performance loss caused by low-bit quantization of the model as much as possible.

## BRIEF DESCRIPTION OF DRAWINGS

FIG. 1 is a schematic structural diagram of an electronic device according to an example of the present disclosure.
FIG. 2 is a flowchart of a model quantization method according to an example of the present disclosure.
FIG. 3 is a schematic diagram of an encoding and decoding architecture according to an example of the present disclosure.
FIG. 4 is a schematic diagram of a model layer structure according to an example of the present disclosure.
FIG. 5 is a flowchart of a model quantization method according to an example of the present disclosure.
FIG. 6 is a schematic diagram of inter- layer parameter dependence within a model according to an example of the present disclosure.
FIG. 7 is a flowchart of a model quantization method according to an example of the present disclosure.
FIG. 8 is a structural block diagram of a model quantization apparatus according to an example of the present disclosure.

The implementation, functional characteristics, and advantages of the purpose of the present disclosure will be further described in conjunction with examples and with reference to the accompanying drawings.

## DETAILED DESCRIPTION

It should be understood that the specific examples described herein are for merely for illustration and are not intended to limit the present disclosure.

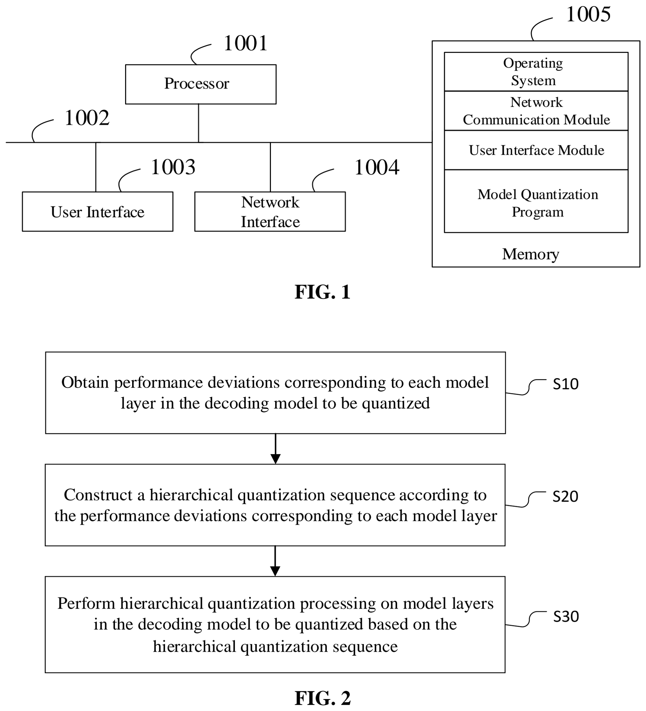

Referring to FIG. 1, FIG. 1 is a schematic structural diagram of an electronic device (a model quantization device) of a hardware operating environment according to an example of the present disclosure.

As shown in FIG. 1, the electronic device may include processor 1001, such as a Central Processing Unit (CPU), communication bus 1002, user interface 1003, network interface 1004, and memory 1005. The communication bus 1002 is configured to enable connective communication between these components. The user interface 1003 may include a Display, and an input unit such as a Keyboard. In some examples, the user interface 1003 may further include a standard wired interface and a wireless interface. In some examples, the network interface 1004 may include a standard wired interface and a wireless interface (e.g., a wireless-fidelity (Wi-Fi) interface). The memory 1005 may be a high-speed Random Access Memory (RAM) or a non-volatile memory (NVM), such as a disk memory. In some examples, the memory 1005 may further be another storage device independent of the aforementioned processor 1001.

Those skilled in the art will understand that the structure shown in FIG. 1 does not constitute a limit to the electronic device, and the electronic device may include more or fewer components than those illustrated, or combine certain components, or have different component arrangements.

As shown in FIG. 1, the memory 1005 as a storage medium may include an operating system, a network communication module, a user interface module, and a model quantization program.

In the electronic device shown in FIG. 1, the network interface 1004 is mainly configured to perform data communication with a network server. The user interface 1003 is mainly configured to perform data interaction with a user. And the electronic device invokes the model quantizeation program stored in the memory 1005 through the processor 1001 to perform the model quantization method provided in the example of the present disclosure.

An example of the present disclosure provides a model quantization method. Referring to FIG. 2, FIG. 2 is a flowchart of a model quantization method according to a first example of the present disclosure.

In this example, the model quantization method includes the following steps.

In step S10, the performance deviations corresponding to each model layer in the decoding model to be quantized are obtained.

It should be noted that the execution entity in this example may be the model quantization device, or may be an encoding device or a decoding device that performs encoding/decoding processing on image data. The model quantization device may be an electronic device such as a personal computer, a server, etc., and may also be other electronic devices capable of realizing the same or similar functions, which is not limited in this example. In this example and the following examples, the model quantization method of the present disclosure is described by using the model quantization device as an example.

It should be noted that, the decoding model to be quantized may be a neural network model included in a decoder employed in a device for decoding bitstreams. There may be a plurality of decoding models to be quantized. When there are a plurality of decoding models to be quantized, the model quantization method may be independently applied to each of the decoding models to be quantized. The performance deviation corresponding to a model layer refers to the deviation of the outputs of the decoding model to be quantized before and after the model layer is individually quantized.

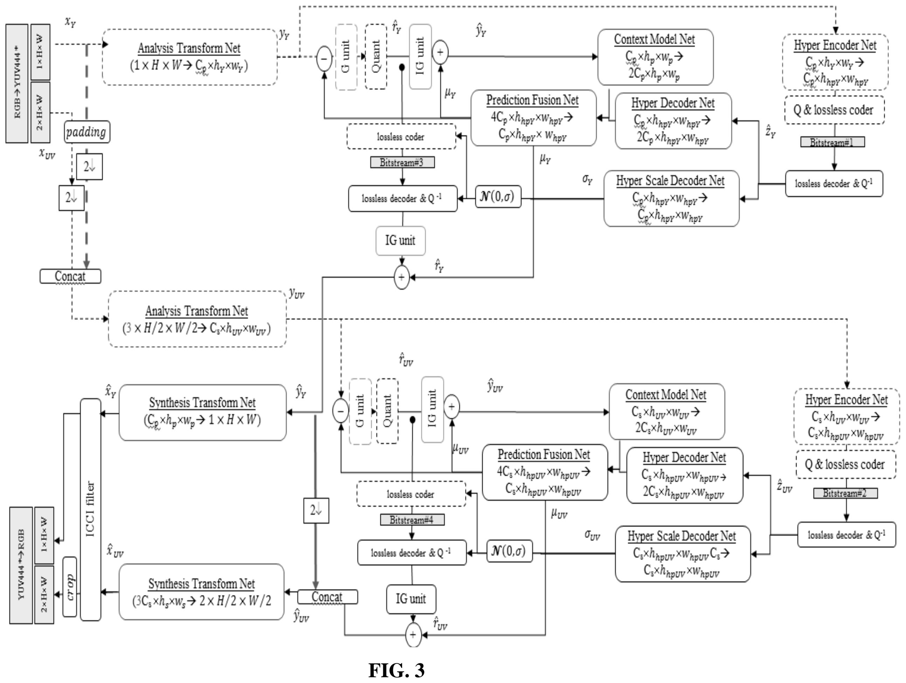

For ease of understanding, the present solution will now be described with reference to FIG. 3, but the present solution is not limited thereto. FIG. 3 is a schematic diagram of an encoding and decoding architecture according to an example of the present disclosure. The image encoding and decoding process based on artificial intelligence is shown in FIG. 3. The network models involved in the overall encoding and decoding process mainly include: Analysis Transform Net, Prediction Fusion Net, Context Model Net, Hyper Decoder Net, Hyper Scale Decoder Net, Hyper Encoder Net, Synthesis Transform Net and ICCI filter. The lower part in FIG. 3 illustrates the image decoder, which is generally deployed on the device that decodes the bitstreams. The neural network models (including Synthesis Transform Net and ICCI filter, etc.) involved in the decoder may serve as the decoding models to be quantized.

In a specific implementation, obtaining the performance deviations corresponding to each model layer in the decoding model to be quantized may be inputting a preset sample to the decoding model to be quantized; obtaining a model output, marking the model output as an initial output; individually performing quantization on each model layer in the decoding model to be quantized; and recording the model outputs corresponding to the preset sample after quantization, so as to obtain the quantization outputs corresponding to each model layer; and calculating the differences between the initial output and the quantization outputs corresponding to each model layer, thereby obtaining the performance deviations corresponding to each model layer in the decoding model to be quantized. Since this example is to reduce the performance loss caused by quantizing the model using low bits, low-bit quantization (for example, 8-bit quantization) may be applied when performing quantization on each model layer in this example.

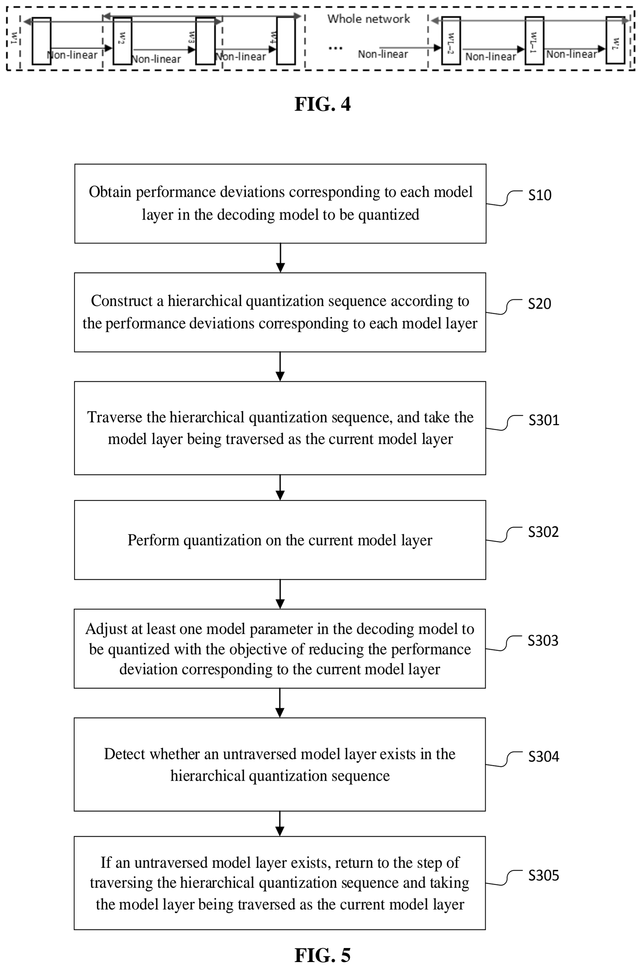

For ease of understanding, the present solution is described in the following with reference to FIG. 4, but is not limited thereto. FIG. 4 is a schematic diagram of a model layer structure according to an example of the present disclosure. As shown in FIG. 4, for a decoding model to be quantized, which includes L model layers (each model layer may be represented as $w_1$, $w_2$.., $w_L$), a preset sample x is input to the decoding model to be quantized. The model output may be represented as:

$$y = f(w_1, w_2, ..., w_L; x).$$

Subsequently, each model layer is individually quantized. In this process, when the 1-th model layer (where $1 \leqq 1 \leqq L$) is quantized individually, each model layer may be represented as

$$w_1, ..., \widehat{w_l}, ..., w_L.$$

Where $\widehat{w_l}$ represents the quantized l-th model layer, and the quantization output corresponding to the l-th model layer may be represented as

$$f(w_1, \widehat{w_l}, ..., w_L; x).$$

Accordingly, the performance deviation $P_1$ for the l-th model layer at this time may be represented as:

$$P_l = |f(w_1, \widehat{w_l}, ..., w_L; x) - f(w_1, w_2, ..., w_L; x)|.$$

In step S20, a hierarchical quantization sequence is constructed according to the performance deviations corresponding to each model layer.

It should be noted that constructing the hierarchical quantization sequence according to the performance deviations corresponding to each model layer may be sorting the model layers according to their corresponding performance deviations, thereby constructing the hierarchical quantization sequence.

In practical applications, to reduce the accumulation of the noise gradients introduced by the straight-through estimator (STE) in each layer during reverse-mode differentiation, in the model quantization operations, it is necessary to start from the hardest-to-quantize layer (the model layer that causes the largest performance deviation) to quantize the model layer by layer. However, the greater the performance deviation is, the greater the performance loss is generated when the model layer is quantized. In actual processing, it is necessary to first process the model layers that cause relatively large performance loss due to quantization. Therefore, the step S20 described in this example may include the following.

Each model layer in the decoding model to be quantized is sorted according to descending order of the corresponding performance deviations, to obtain a hierarchical quantization sequence.

It can be understood that, since the model layers that cause relatively large performance loss due to quantization need to be processed first, when constructing the hierarchical quantization sequence, it needs to be ensured that the model layers that cause large performance loss are located at the front of the sequence. Therefore, the model layers in the decoding model to be quantized may be sorted according to descending order of their corresponding performance deviations, to obtain the hierarchical quantization sequence. In some examples, each model layer may be represented by an identifier (e.g., a layer number) respectively, and the hierarchical quantization sequence may be a sequence including the sorted identifiers.

For example, assuming that there are three model layers: A, B, and C, and their corresponding performance deviations are a, b, and c. If c > a > b exists, the constructed hierarchical quantization sequence is C-A-B.

In a possible implementation of the example of the present disclosure, in order to accelerate the quantization rate as much as possible, the step of sorting each model layer in the decoding model to be quantized according to descending order of the corresponding performance deviations to obtain the hierarchical quantization sequence may include the following.

Each model layer in the decoding model to be quantized is sorted according to descending order of the corresponding performance deviations to obtain a model layer sequence.

The model layer sequence is truncated front-to-back according to a preset length to obtain the hierarchical quantization sequence. In some examples, the hierarchical quantization sequence may be obtained by truncating the model layer sequence front-to-back from the first model layer in the model layer sequence according to the preset length. In some examples, the hierarchical quantization sequence may be obtained by truncating the model layer sequence front-to-back from an intermediate model layer comprised in the model layer sequence according to the preset length.

In some examples, the preset length may be set in advance by the administrator of the model quantization device according to actual needs, for example, the preset length may be set to 3.

In practical application, when quantizing the model by using low bits, the generated performance loss may be caused by a very small portion of all model layers. Therefore, when processing the model, only a portion of the model layers may be processed. Thus, a preset length may be set in advance, and each model layer in the decoding model to be quantized may be sorted according to the descending order of the corresponding performance deviations to obtain a model layer sequence, and the model layer sequence may be truncated from front to back according to a preset length to obtain a hierarchical quantization sequence.

For example, assuming that the preset length is 3 and the model layer sequence is A-B-C-D-E, the model layer sequence is truncated front-to-back according to the preset length, and the obtained hierarchical quantization sequence is A-B-C.

Of course, since the performance deviation may be used to represent the performance loss generated when a model layer is quantized, the model layer sequence may instead not be truncated front-to-back according to a preset length, but a performance deviation threshold may be preset, and then the model layers in the decoding model to be quantized are sorted according to descending order of the corresponding performance deviations to obtain the model layer sequence. The portion of the model layer sequence, of which the corresponding performance deviations are greater than the performance deviation threshold, is truncated, and the truncated portion serves as the hierarchical quantization sequence.

For example, assuming that the model layer sequence is A-B-C-D-E, and the corresponding performance deviations are a, b, c, d, e, where a > b > c > d > e, and assuming that the performance deviation threshold is x, where d < x < c, the hierarchical quantization sequence obtained by truncation is A-B-C.

In step S30, hierarchical quantization processing is performed on model layers in the decoding model to be quantized based on the hierarchical quantization sequence.

It should be noted that the hierarchical quantization processing performed on the model layers in the decoding model to be quantized based on the hierarchical quantization sequence may be sequentially performing hierarchical quantization on the corresponding model layers in the decoding model to be quantized based on the order defined by the hierarchical quantization sequence. The hierarchical quantization processing may include steps such as model quantization, parameter adjustment, etc.

According to the examples of the present disclosure, the performance deviations corresponding to each model layer in the decoding model to be quantized are obtained; a hierarchical quantization sequence is constructed according to the performance deviations corresponding to each model layer; and hierarchical quantization processing is performed on the model layers in the decoding model to be quantized based on the hierarchical quantization sequence. Since the hierarchical quantization sequence is constructed according to the performance deviations corresponding to each model layer in the decoding model to be quantized, the corresponding model layers in the decoding model to be quantized are respectively subjected to hierarchical quantization processing according to the order of the hierarchical quantization sequence, and parameter adjustment is utilized after quantization in the processing process, so as to reduce the performance loss of the model caused by low-bit quantization as much as possible.

Referring to FIG. 5, FIG. 5 is a flowchart of a model quantization method according to a second example of the present disclosure.

Based on the above first example, the step S30 of the model quantization method according to the example of the present disclosure includes the following.

In step S301, the hierarchical quantization sequence is traversed, and the model layer being traversed is taken as the current model layer.

It should be noted that traversing the hierarchical quantization sequence may be traversing the hierarchical quantization sequence according to the order of the hierarchical quantization sequence.

In step S302, quantization is performed on the current model layer.

It should be noted that performing quantization on the current model layer may be quantizing the model parameters of the current model layer by using low bits (e.g., 8 bits), and approximately representing the floating-point model parameters and the floating-point input-output features of the model layer by using fixed-point values.

In step S303, at least one model parameter in the decoding model to be quantized is adjusted with the objective of reducing the performance deviation corresponding to the current model layer.

It should be noted that, adjusting at least one model parameter in the decoding model to be quantized with the objective of reducing the performance deviation corresponding to the current model layer may be adjusting at least one model parameter in the decoding model to be quantized, so as to attempt to reduce the performance deviation corresponding to the current model layer. After each parameter adjustment, the performance deviation corresponding to the current model layer (i.e., the performance deviation generated after the current model layer is quantized) may be recalculated.

In practical application, at least one model parameter in the decoding model to be quantized may be adjusted by employing gradient derivation with the objective of reducing the performance deviation corresponding to the current model layer. For example, at least one model parameter in the decoding model to be quantized may be adjusted by employing a straight-through gradient estimation algorithm with the objective of reducing the performance deviation corresponding to the current model layer. Other similar algorithms may also be employed.

When adjusting the model parameters using an algorithm, the algorithm module provided in the model framework may be invoked for adjustment. For example, if the straight-through gradient estimation algorithm is employed, the straight-through estimator (STE) in the model framework may be invoked directly. Of course, the calculation may also be performed independently, and this example is not limited in this regard.

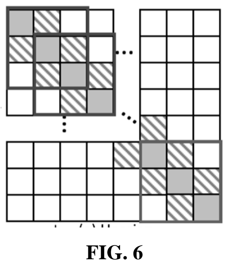

In practical applications, the parameters across model layers in the decoding model to be quantized are correlated, that is, changing parameters of one model layer will affect the inputs and outputs of other model layers. The relationships between the model layers are shown in FIG. 6. Quantizing a specific parameter in one model layer may cause a relatively large deviation of the model output, leading to a relatively large performance loss of the model. To correct the deviation caused by quantization, the correlation between the parameter and other parameters across the model layers may be used to adjust said other parameters via output reconstruction approach. In addition, the correlations across the model layers may further be used to correct the feature deviation caused by quantization. Therefore, when adjusting at least one model parameter in the decoding model to be quantized, at least one of the following may be included.

At least one model parameter of the current model layer is adjusted.

At least one model parameter of the current model layer and at least one model parameter of a model layer adjacent to the current model layer are adjusted.

At least one model parameter of each model layer in the decoding model to be quantized is adjusted.

Assuming that the current model layer is the l-th model layer, adjusting at least one model parameter of the current model layer may be updating the model parameters in the l-th model layer by gradient using gradient derivation with the optimization objective of reducing the performance deviation $P_1$ of the current model layer. Since the l-th model layer is quantized, the parameters of the l-th model layer may be denoted as $\widehat{w_l}$.

Adjusting at least one model parameter of the current model layer and at least one model parameter of a model layer adjacent to the current model layer may be updating the model parameters ( $\widehat{w_l}$, $w_{1-1}$, $w_{1+1}$) of the l-th model layer, the (l - 1)-th model layer, and (l + 1)-th model layer with an optimization objective of reducing the performance deviation $P_1$ of the current model layer.

Adjusting at least one model parameter of each model layer in the decoding model to be quantized may be updating the model parameters of all the model layers in the coding model to be quantized with the optimization objective of reducing the performance deviation $P_1$ of the current model layer.

In step S304, it is detected whether an untraversed model layer exists in the hierarchical quantization sequence.

It should be noted that, in the traversal process of the hierarchical quantization sequence, an index value may further be recorded during traversal. It is determined whether the traversal of the hierarchical quantization sequence is completed according to the index value, and if the traversal is not completed, it may be determined that there is a model layer that has not been traversed.

Of course, it is also feasible to record the layer number of the model layer currently being traversed during traversal, mark the traversed model layers in the hierarchical quantization sequence according to the corresponding layer numbers, and determine whether an untraversed model layer exists according to the marks, which is not limited in this example.

In step S305, if an untraversed model layer exists, returning to the step of traversing the hierarchical quantization sequence and taking the model layer being traversed as the current model layer.

It can be understood that if an untraversed model layer exists, the hierarchical quantization sequence may continue to be traversed, and therefore, step S301 may be returned to, and traversal of the hierarchical quantization sequence continues.

In the example of the present disclosure, a hierarchical quantization sequence is traversed, the model layer currently being traversed is subjected to quantization, after the quantization is completed, at least one model parameter in the decoding model to be quantized is adjusted with the objective of reducing the performance deviation corresponding to the current model layer, and model output is attempted to be corrected through parameter adjustment, thereby reducing the performance loss of the model due to the low-bit quantization so as to reduce the overall performance loss of the model due to the low-bit quantization as much as possible.

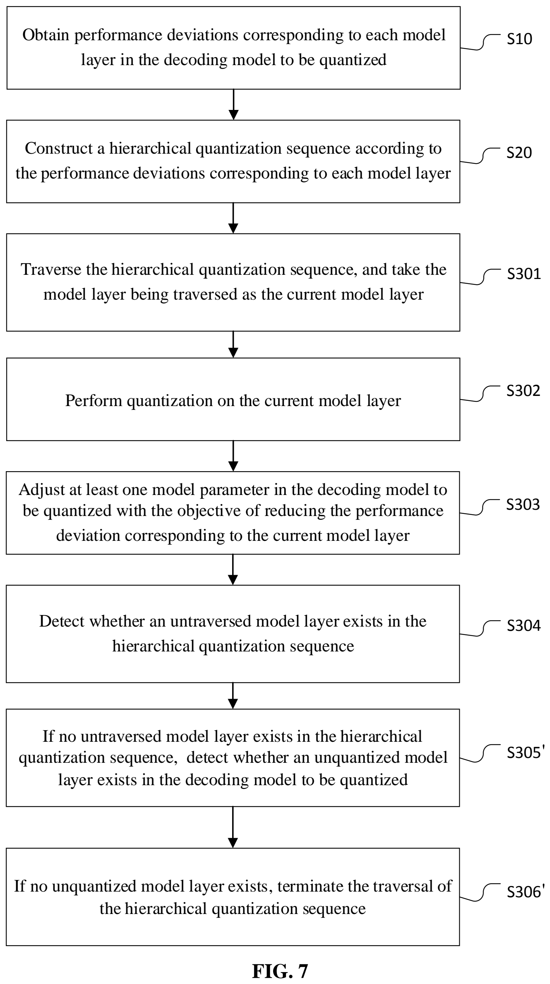

Referring to FIG. 7, FIG. 7 is a flowchart of a model quantization method according to a third example of the present disclosure.

Based on the above second example, after the step S304, the model quantization method of the example of the present disclosure further includes the following.

In step S305', if no untraversed model layer exists in the hierarchical quantization sequence, it is detected whether an unquantized model layer exists in the decoding model to be quantized.

In step S306', if no unquantized model layer exists, the traversal of the hierarchical quantization sequence is terminated.

It should be noted that the hierarchical quantization sequence may be obtained by truncating the model layer sequence, which may not include all model layers of the decoding model to be quantized. Thus, when there is no untraversed model layer in the hierarchical quantization sequence, there may still be some unquantized model layers in the decoding model to be quantized. Therefore, when there is no untraversed model layer in the hierarchical quantization sequence, it is still necessary to detect whether there is an unquantized model layer in the decoding model to be quantized.

Detecting whether there is still an unquantized model layer in the decoding model to be quantized may be detecting whether there are model parameters or input-output features represented in the floating-point type in the decoding model to be quantized. If there are the model parameters or the input-output features represented in the floating-point type, it may be determined that there is an unquantized model layer. If there is no model parameter or input-output feature represented in the floating-point type, it may be determined that there is no unquantized model layer.

It can be understood that if there is no unquantized model layer, it indicates that all model layers in the decoding model to be quantized have been quantized, and therefore, the traversal of the hierarchical quantization sequence may be terminated directly.

To ensure that all model layers in the decoding model to be quantized are quantized, after the step of detecting whether an unquantized model layer exists in the decoding model to be quantized if no untraversed model layer exists in the hierarchical quantization sequence, an example of the present disclosure may further include the following.

If an unquantized model layer exists, quantization is performed on the unquantized model layer.

The traversal of the hierarchical quantization sequence is terminated upon completion of the quantization.

It should be noted that if there is no untraversed model layer in the hierarchical quantization sequence, but there is an unquantized model layer in the decoding model to be quantized, it indicates that the hierarchical quantization sequence is formed by truncating the model layer sequence, and does not include all the model layers in the decoding model to be quantized, and a model layer that is not added to the hierarchical quantization sequence during truncation is generally a model layer that causes a very small performance loss due to quantization and has a very small influence on the overall performance. Therefore, quantization may be directly performed on the unquantized model layers in the decoding model to be quantized. Performing quantization on an unquantized model layer in the decoding model to be quantized may be performing low-bit quantization on the model parameters and input-output features of the unquantized model layer in the decoding model to be quantized.

It can be understood that when the quantization is completed for all the unquantized model layers in the decoding model to be quantized, all the model layers in the decoding model to be quantized have been quantized. Therefore, the traversal of the hierarchical quantization sequence may be terminated.

In the example of the present disclosure, under a condition that there is no untraversed model layer in the hierarchical quantization sequence, it is detected whether there is an unquantized model layer in the decoding model to be quantized, and when there is an unquantized model layer, quantization is performed on the unquantized model layer, so as to ensure that all model layers in the decoding model to be quantized are quantized when the processing is completed.

In addition, an example of the present disclosure further provides a storage medium, on which a model quantization program is stored, and when the model quantization program is executed by a processor, the steps of the model quantization method described above are implemented.

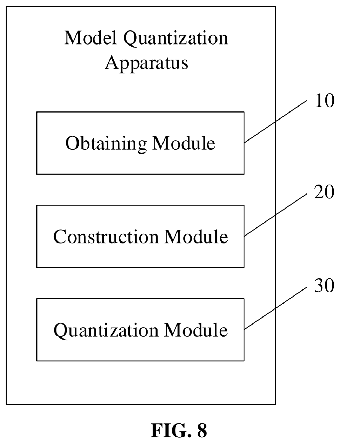

Referring to FIG. 8, FIG. 8 is a structural block diagram of a first example of a model quantization apparatus in the present disclosure.

As shown in FIG. 8, the model quantization apparatus proposed in the example of the present disclosure includes the following.

An obtaining module 10, is configured to obtain performance deviations corresponding to each model layer in the decoding model to be quantized.

A construction module 20, is configured to construct a hierarchical quantization sequence according to the performance deviations corresponding to each model layer.

A quantization module 30, is configured to perform hierarchical quantization processing on model layers in the decoding model to be quantized based on the hierarchical quantization sequence.

The example of the present disclosure obtains performance deviations corresponding to each model layer in a decoding model to be quantized, constructs a hierarchical quantization sequence according to the performance deviations corresponding to each model layer, and performs hierarchical quantization processing on model layers in the decoding model to be quantized based on the hierarchical quantization sequence. Since the hierarchical quantization sequence is constructed according to the performance deviations corresponding to each model layer in the decoding model to be quantized, and hierarchical quantization processing is performed on each model layer in the decoding model to be quantized respectively, according to the order of the hierarchical quantization sequence, and parameter adjustment may be utilized after quantization during processing, so as to reduce the performance loss caused by low-bit quantization of the decoding model to be quantized as much as possible.

In a possible implementation of the example of the present disclosure, the construction module 20 is further configured to sort each model layer in the decoding model to be quantized according to descending order of the corresponding performance deviations, so as to obtain the hierarchical quantization sequence.

In a possible implementation of the example of the present disclosure, the construction module 20 is further configured to sort each model layer in the model to be quantized according to descending order of the corresponding performance deviations to obtain a model layer sequence, and truncate the model layer sequence front-to-back according to a preset length, to obtain the hierarchical quantization sequence.

In a possible implementation of the example of the present disclosure, the performance deviation corresponding to a model layer in the model to be quantized is a deviation between outputs of the decoding model to be quantized before and after the model layer is individually quantized.

In a possible implementation of the example of the present disclosure, the quantization module 30 is further configured to traverse the hierarchical quantization sequence, take the model layer currently being traversed as a current model layer, perform quantization on the current model layer, adjust at least one model parameter in the decoding model to be quantized with an objective of reducing the performance deviation corresponding to the current model layer, detect whether an untraversed model layer exists in the hierarchical quantization sequence, if an untraversed model layer exists, return to the step of traversing the hierarchical quantization sequence and taking the model layer currently being traversed as the current model layer.

In a possible implementation of an example of the present disclosure, the quantization module 30 is further configured to adjust at least one model parameter in the decoding model to be quantized by employing gradient derivation, with the objective of reducing the performance deviation corresponding to the current model layer.

In a possible implementation of an example of the present disclosure, adjusting at least one model parameter in the decoding model to be quantized comprises at least one of the following.

At least one model parameter of the current model layer is adjusted.

At least one model parameter of the current model layer and at least one parameter of a model layer adjacent to the current model layer are adjusted.

At least one model parameter of each model layer in the decoding model to be quantized is adjusted.

In a possible implementation of an example of the present disclosure, the quantization module 30 is further configured to detect whether an unquantized model layer exists in the decoding model to be quantized if there is no untraversed model layer in the hierarchical quantization sequence, and terminate traversal of the hierarchical quantization sequence if no unquantized model layer exists.

In a possible implementation of the example of the present disclosure, the quantization module 30 is further configured to, if an unquantized model layer exists in the decoding model to be quantized, perform quantization on the unquantized model layer in the decoding model to be quantized, and terminate traversal of the hierarchical quantization sequence when the quantization on the unquantized model layers is completed.

It should be understood that the above is merely for illustration, and does not constitute any limitation to the technical solution of the present disclosure. In specific applications, those skilled in the art may set as needed, and the present disclosure imposes not limitation thereto.

It should be noted that the workflow described above is only schematic, and does not limit the scope of protection of the present disclosure. In practical application, those skilled in the art may select some or all of the aforementioned content to achieve the purpose of the examples of the present disclosure according to actual needs, which is not limited here.

In addition, for technical details not described in detail in the example, reference may be made to the model quantization method provided in any example of the present disclosure, and details are not repeated here.

Furthermore, it should be noted herein that, the terms "comprise", "include", or any other variation thereof, are intended to cover a non-exclusive inclusion, such that a process, method, article, or system that comprises a series of elements not only includes those elements, but may also include other elements not explicitly listed, or elements inherent to such a process, method, article, or system. Without further limitation, an element defined by the phrase "comprising a..." does not preclude the presence of other identical elements in the process, method, article, or system that includes the element.

The serial numbers of the examples of the present disclosure are merely for description, and do not represent the advantages and disadvantages of the examples.

Through the description of the above examples, those skilled in the art can clearly understand that the method of the above examples can be implemented by means of software and a necessary general hardware platform. Of course, it can also be implemented by means of hardware, but in many cases, the former is a better implementation. Based on such understanding, the essence of the technical solution of the present disclosure or the part contributing to the prior art may be embodied in the form of a computer software product, which is stored in a storage medium (such as Read Only Memory (ROM), RAM, magnetic disk, or optical disk) and includes several instructions to cause a terminal device (which may be a mobile phone, a computer, a server, or a network device, etc.) to execute the method described in various examples of the present disclosure.

The foregoing is only preferred examples of the present disclosure, and is not intended to limit the patent scope of the present disclosure. Any equivalent structural or procedural transformations made based on the content of the specification and drawings of the present disclosure, or direct or indirect application in other related technical fields, shall similarly fall within the protection scope of the present disclosure.

**Claims**

1.   A model quantization method, comprising:

   obtaining performance deviations corresponding to each model layer in a model to be quantized;
   constructing a hierarchical quantization sequence according to the performance deviations corresponding to each model layer; and
   performing hierarchical quantization processing on model layers in the model to be quantized based on the hierarchical quantization sequence.

2.   The model quantization method according to claim 1, wherein constructing the hierarchical quantization sequence according to the performance deviations corresponding to each model layer comprises:
   sorting each model layer in the model to be quantized according to descending order of the corresponding performance deviations to obtain the hierarchical quantization sequence.

3.   The model quantization method according to claim 2, wherein sorting each model layer in the model to be quantized according to descending order of the corresponding performance deviations to obtain the hierarchical quantization sequence comprises:

   sorting each model layer in the model to be quantized according to descending order of the corresponding performance deviations to obtain a model layer sequence; and

truncating the model layer sequence front-to-back according to a preset length, to obtain the hierarchical quantization sequence.

4.   The model quantization method according to claim 1, wherein the performance deviation corresponding to a model layer in the model to be quantized is a deviation between outputs of the model to be quantized before and after the model layer is individually quantized.

5.   The model quantization method according to any one of claims 1 to 4, wherein performing the hierarchical quantization processing on the model layers in the model to be quantized based on the hierarchical quantization sequence comprises:

   traversing the hierarchical quantization sequence, and taking the model layer currently being traversed as a current model layer;
   performing quantization on the current model layer;
   adjusting at least one model parameter in the model to be quantized with an objective of reducing the performance deviation corresponding to the current model layer;
   detecting whether an untraversed model layer exists in the hierarchical quantization sequence;
   in response to determining that an untraversed model layer exists in the hierarchical quantization sequence, returning to a step of traversing the hierarchical quantization sequence and taking the model layer currently being traversed as the current model layer.

6.   The model quantization method according to claim 5, wherein adjusting at least one model parameter in the model to be quantized with the objective of reducing the performance deviation corresponding to the current model layer comprises:
   adjusting at least one model parameter in the model to be quantized by employing gradient derivation, with the objective of reducing the performance deviation corresponding to the current model layer.

7.   The model quantization method according to claim 5, wherein adjusting at least one model parameter in the model to be quantized comprises at least one of:

   adjusting at least one model parameter of the current model layer;
   adjusting at least one model parameter of the current model layer and at least one model parameter of a model layer adjacent to the current model layer; and
   adjusting at least one model parameter of each model layer in the model to be quantized.

**8.** The model quantization method according to claim 5, wherein the method further comprises:

in response to determining that no untraversed model layer exists in the hierarchical quantization sequence, detecting whether an unquantized model layer exists in the model to be quantized;
in response to determining that no unquantized model layer exists in the model to be quantized, determining that quantization of the model to be quantized is completed.

**9.** The model quantization method according to claim 8, wherein the method further comprises:

in response to determining that an unquantized model layer exists in the model to be quantized, performing quantization on the unquantized model layer;
in response to the quantization of the unquantized model layer being completed, determining that the quantization of the model to be quantized is completed.

**10.** The model quantization method according to any one of claims 1 to 9, wherein the model to be quantized is a decoding model or an encoding model.

**11.** The model quantization method according to claim 3, wherein truncating the model layer sequence front-to-back according to the preset length comprises: truncating the model layer sequence front-to-back from a first model layer comprised in the model layer sequence according to the preset length.

**12.** A model quantization apparatus, comprising:

an obtaining module, configured to obtain performance deviations corresponding to each model layer in a model to be quantized;
a construction module, configured to construct a hierarchical quantization sequence according to the performance deviations corresponding to each model layer;
a quantization module, configured to perform hierarchical quantization processing on model layers in the model to be quantized based on the hierarchical quantization sequence.

**13.** A model quantization device comprising a processor, a memory, and a model quantization program stored on the memory and executable by the processor, the model quantization program being executed by the processor to perform the model quantization method according to any one of claims 1 to 11.

**14.** An encoding device, comprising: a processor, a memory, and an encoding program stored on the memory and executable by the processor, the encoding program being executed by the processor to perform the model quantization method according to any one of claims 1 to 11.

**15.** A decoding device, comprising: a processor, a memory, and a decoding program stored on the memory and executable by the processor, the decoding program being executed by the processor to perform the model quantization method according to any one of claims 1 to 11.

**16.** A storage medium, wherein a model quantization program is stored on the storage medium, and the model quantization program is configured to perform the model quantization method according to any one of claims 1 to 11.

1005

| 1001 | Operating System |
|------|------------------|
| Processor | Network Communication Module |

1002

| 1003 | 1004 | User Interface Module |
|------|------|----------------------|
| User Interface | Network Interface | Model Quantization Program |

Memory

**FIG. 1**

```
┌─────────────────────────────────────────────────┐
│ Obtain performance deviations corresponding to   │      S10
│ each model layer in the decoding model to be     │
│ quantized                                        │
└─────────────────────────────────────────────────┘
                        │
                        ▼
┌─────────────────────────────────────────────────┐
│ Construct a hierarchical quantization sequence   │      S20
│ according to the performance deviations          │
│ corresponding to each model layer                │
└─────────────────────────────────────────────────┘
                        │
                        ▼
┌─────────────────────────────────────────────────┐
│ Perform hierarchical quantization processing on  │      S30
│ model layers in the decoding model to be         │
│ quantized based on the hierarchical quantization │
│ sequence                                         │
└─────────────────────────────────────────────────┘
```

**FIG. 2**

**FIG. 3**

EP 4 730 205 A1

**FIG. 4**

```
┌─────────────────────────────────────────────────────────────┐
│ Obtain performance deviations corresponding to each model    │ ── S10
│ layer in the decoding model to be quantized                  │
└─────────────────────────────────────────────────────────────┘
                            │
                            ▼
┌─────────────────────────────────────────────────────────────┐
│ Construct a hierarchical quantization sequence according to  │ ── S20
│ the performance deviations corresponding to each model layer │
└─────────────────────────────────────────────────────────────┘
                            │
                            ▼
┌─────────────────────────────────────────────────────────────┐
│ Traverse the hierarchical quantization sequence, and take the│ ── S301
│ model layer being traversed as the current model layer       │
└─────────────────────────────────────────────────────────────┘
                            │
                            ▼
┌─────────────────────────────────────────────────────────────┐
│ Perform quantization on the current model layer              │ ── S302
└─────────────────────────────────────────────────────────────┘
                            │
                            ▼
┌─────────────────────────────────────────────────────────────┐
│ Adjust at least one model parameter in the decoding model to │ ── S303
│ be quantized with the objective of reducing the performance  │
│ deviation corresponding to the current model layer           │
└─────────────────────────────────────────────────────────────┘
                            │
                            ▼
┌─────────────────────────────────────────────────────────────┐
│ Detect whether an untraversed model layer exists in the      │ ── S304
│ hierarchical quantization sequence                           │
└─────────────────────────────────────────────────────────────┘
                            │
                            ▼
┌─────────────────────────────────────────────────────────────┐
│ If an untraversed model layer exists, return to the step of  │ ── S305
│ traversing the hierarchical quantization sequence and taking │
│ the model layer being traversed as the current model layer   │
└─────────────────────────────────────────────────────────────┘
```

**FIG. 5**

**FIG. 6**

Obtain performance deviations corresponding to each model layer in the decoding model to be quantized ⌐ S10

Construct a hierarchical quantization sequence according to the performance deviations corresponding to each model layer ⌐ S20

Traverse the hierarchical quantization sequence, and take the model layer being traversed as the current model layer ⌐ S301

Perform quantization on the current model layer ⌐ S302

Adjust at least one model parameter in the decoding model to be quantized with the objective of reducing the performance deviation corresponding to the current model layer ⌐ S303

Detect whether an untraversed model layer exists in the hierarchical quantization sequence ⌐ S304

If no untraversed model layer exists in the hierarchical quantization sequence, detect whether an unquantized model layer exists in the decoding model to be quantized ⌐ S305'

If no unquantized model layer exists, terminate the traversal of the hierarchical quantization sequence ⌐ S306'

**FIG. 7**

Model Quantization
Apparatus

Obtaining Module — 10

Construction Module — 20

Quantization Module — 30

**FIG. 8**

# EP 4 730 205 A1

## INTERNATIONAL SEARCH REPORT

| International application No. |
|---|
| **PCT/CN2024/105152** |

### A. CLASSIFICATION OF SUBJECT MATTER

G06N 3/082(2023.01)i; G06N 3/0495(2023.01)i

According to International Patent Classification (IPC) or to both national classification and IPC

### B. FIELDS SEARCHED

Minimum documentation searched (classification system followed by classification symbols)

IPC: G06N

Documentation searched other than minimum documentation to the extent that such documents are included in the fields searched

Electronic data base consulted during the international search (name of data base and, where practicable, search terms used)

CNABS: CNTXT; CNKI; VEN; USTXT; WOTXT; EPTXT; IEEE: 量化, 模型, 性能, 准确率, 损失, 误差, 偏差, 分层, 序列, 遍历, quantification, model, performance, accuracy, loss, error, bias, layer, sequence, traversal

### C. DOCUMENTS CONSIDERED TO BE RELEVANT

| Category* | Citation of document, with indication, where appropriate, of the relevant passages | Relevant to claim No. |
|---|---|---|
| X | HUBARA, I. et al. "Improving Post Training Neural Quantization:Layer-wise Calibration and Integer Programming" *arXiv*, 14 December 2020 (2020-12-14), pages 1-15 | 1-16 |
| X | CN 113762503 A (TENCENT CLOUD COMPUTING (BEIJING) CO., LTD.) 07 December 2021 (2021-12-07) description, paragraphs [0032]-[0036] | 1-16 |
| A | CN 111652366 A (HARBIN INSTITUTE OF TECHNOLOGY) 11 September 2020 (2020-09-11) entire document | 1-16 |

☐ Further documents are listed in the continuation of Box C.  ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
|---|---|
| **13 August 2024** | **02 September 2024** |

| Name and mailing address of the ISA/CN | Authorized officer |
|---|---|
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
Information on patent family members

International application No.

**PCT/CN2024/105152**

| Patent document cited in search report | | | Publication date (day/month/year) | Patent family member(s) | | | Publication date (day/month/year) |
|---|---|---|---|---|---|---|---|
| CN | 113762503 | A | 07 December 2021 | US | 2023252294 | A1 | 10 August 2023 |
| | | | | WO | 2022246986 | A1 | 01 December 2022 |
| CN | 111652366 | A | 11 September 2020 | | None | | |

Form PCT/ISA/210 (patent family annex) (July 2022)